# EUROPÄISCHE PATENTSCHRIFT

(11) **EP 0 932 760 B1**
(45) Veröffentlichungstag und Bekanntmachung des Hinweises auf die Patenterteilung: **26.01.2005**
(21) Anmeldenummer: 98933501.3
(22) Anmeldetag: 12.05.1998
(51) Int. Cl.: F04B 1/04

(54) **VERLIERSICHERUNG FÜR EINEN KOLBEN EINER RADIALKOLBENPUMPE**
SECURING DEVICE FOR A PISTON OF A RADIAL PISTON PUMP
DISPOSITIF ANTIPERTE POUR UN PISTON D'UNE POMPE A PISTONS RADIAUX

(30) Priorität: 30.07.1997 DE 19732812; 26.09.1997 DE 19742611
(43) Veröffentlichungstag der Anmeldung: 04.08.1999
(73) Patentinhaber: ROBERT BOSCH GMBH, 70442 Stuttgart (DE)
(72) Erfinder: SCHULLER, Wolfgang, D-74343 Sachsenheim (DE); WEH, Andreas, D-87471 Durach (DE); FLUCK, Tobias, D-87501 Immenstadt (DE)
(86) Internationale Anmeldenummer: PCT/DE1998/001307
(87) Internationale Veröffentlichungsnummer: WO 1999/006695

(56) Entgegenhaltungen:
- WO-A-96/28661
- DE-A- 4 407 978
- FR-A- 2 582 058
- GB-A- 2 295 653

## Beschreibung

### Stand der Technik

Die Erfindung betrifft eine Kolbenpumpe nach der Gattung des Hauptanspruchs.

Die Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

Es ist eine Vielzahl derartiger Kolbenpumpen bekannt. Beispielhaft genannt seien die aus der DE 41 07 979 A1 und aus der DE 44 07 978 A1 bekannten Kolbenpumpen. Die bekannten Kolbenpumpen weisen einen stabförmigen Kolben auf, der in einer Laufbuchse axial verschieblich geführt ist. Zum Antrieb des Kolbens zu einer hin- und hergehenden Hubbewegung dient ein elektromotorisch rotierend antreibbarer Exzenter, der den Kolben an einer aus der Laufbuchse vorstehenden Stirnseite beaufschlagt. Die Laufbuchse ist in eine Zylinderbohrung eines Pumpengehäuses eingesetzt.

Zum Zusammenbau der bekannten Kolbenpumpen werden deren Kolben in die Laufbuchse eingeführt und durch Anbringen einer Verliersicherung in der Laufbuchse gehalten. Als Verliersicherung wird bei der erstgenannten Druckschrift ein Niet in eine Radialbohrung der Laufbuchse eingesetzt, wobei der Niet nach innen übersteht und in eine umlaufende Nut im Kolben, die um mindestens einen Kolbenhub breiter als ein Durchmesser des Nietes ist, hineinragt und auf diese Weise den Kolben in der Laufbuchse sichert. Bei der zweitgenannten Druckschrift wird eine Hülse in ein Ende der Laufbuchse eingepreßt. Der Kolben dieser Kolbenpumpe verjüngt sich an einer Ringstufe, an der die in die Laufbuchse eingepreßte Hülse den Kolben in der Laufbuchse hält. Danach wird die Laufbuchse in die Zylinderbohrung des Pumpengehäuses eingeschraubt oder eingepreßt und verstemmt. Durch die Verliersicherung des Kolbens in der Laufbuchse wird der Zusammenbau der Kolbenpumpe vereinfacht, insbesondere bei Kolbenpumpen, die eine Kolbenrückstellfeder aufweisen, welche den Kolben aus der Laufbuchse heraus drückt.

Ferner sind aus den beiden Dokumenten GB 2 295 653 A und FR 2 582 058 A1 Kolbenpumpen bekannt, deren Pumpenkolben jeweils in einem drehbar gelagerten Rotor angeordnet sind. Die Kolben stützen sich mittels Wälzkörpern an einem den Rotor umgebenden ortsfesten Hubring ab. Im Unterschied zum Gegenstand.vorliegender Erfindung sind keine Verliersicherungen sondern Verdrebsicherungen vorhanden, die verhindern sollen, dass sich die Kolben um ihre Längsachsen drehen. Diese bekannten Verdrehsicherungen bestehen aus jeweils einem u-förmigen Bügelelement, das seitlich des Zylinders befestigt ist und die Zylinderwand am offenen Ende des Zylinders übergreift. Das Bügelelement wirkt auf die Seitenflächen der Wälzkörper ein. Diese Verdrehsicherungen umgreifen die Kolben nicht ringförmig und greifen in keine umlaufende Nuten der Kolben ein. Die bekannten Nuten verlaufen parallel zu den Kolbenlängsachsen.

### Vorteile der Erfindung

Die erfindungsgemäße Kolbenpumpe mit den Merkmalen des Anspruchs 1 hat den Vorteil, daß die Verliersicherung beim Einführen des Kolbens in die Laufbuchse selbsttätig am Kolben bzw. an der Laufbuchse quasi einrastet und die Hinterschneidung von selbst hintergreift, wodurch der Kolben zwar tiefer in die Laufbuchse hineingedrückt jedoch nicht weiter aus der Laufbuchse herausgezogen werden kann, als bis die Hinterschneidung an der Verliersicherung anstößt. Dies vereinfacht das verliersichere Einführen des Kolbens in die Laufbuchse gegenüber den bekannten Kolbenpumpen. Mit Hilfe der leicht anbringbaren Verliersicherung erhält man eine die Laufbuchse und den Kolben umfassende Vormontagebaugruppe. DieVormontagebaugruppe ist robust und gut handhabbar, ihre sämtlichen Teile sind verliersicher aneinandergehalten. Sie läßt sich einfach beispielsweise durch Einpressen in eine Zylinderbohrung des Pumpengehäuses einsetzen.

Weiterer Vorteil der erfindungsgemäßen Kolbenpumpe ist, daß kein Stufenkolben wie beispielsweise bei der aus der bereits genannten DE 41 07 979 A1 bekannten Kolbenpumpe für die Verliersicherung erforderlich ist, der Kolben kann an zwei axial voneinander beabstandeten Stellen mit demselben Führungsdurchmesser geführt sein.

Auch ist zur Verwirklichung der Erfindung umgekehrt möglich, die Verliersicherung am Kolben anzubringen, wobei die Verliersicherung beim Einführen des Kolbens in die Laufbuchse selbsttätig mit der Laufbuchse in Eingriff gelangt. (Anspruch 2).

Die Hinterschneidung am Kolben oder der Laufbuchse der erfindungsgemäßen Kolbenpumpe muß nicht umlaufend ausgebildet sein. Sie kann beispielsweise auch durch eine oder mehrere über den Umfang verteilte Ausnehmungen im Umfang des Kolbens oder der Laufbuchse gebildet sein.

Die Unteransprüche haben vorteilhafte Ausgestaltungen und Weiterbildungen der im Hauptanspruch angegebenen Erfindung zum Gegenstand.

In bevorzugter Ausgestaltung weist die erfindungsgemäße Kolbenpumpe ein hohlzylindrisches Filter auf, welches den Kolben umgebend in axialer Verlängerung der Laufbuchse an der Laufbuchse angebracht ist und welches die Verliersicherung vorzugsweise einstückig aufweist (Anspruch 7). Diese Ausgestaltung der Erfindung hat den Vorteil, daß kein separates Bauteil als Verliersicherung erforderlich ist, sondern daß ein Filter der Kolbenpumpe zugleich auch die Verliersicherung bildet.

Bei einer Weiterbildung gemäß Anspruch 8 dient das hohlzylindrische Filter als Führung für den Kolben in der Laufbuchse, die den Kolben vor dem Einsetzen der Vormontagebaugruppe in das Pumpengehäuse axial zur Laufbuchse ausgerichtet hält. Dadurch wird das Einbauen der Teile, die in das Pumpengehäuse eingebaut werden müssen, auf vorteilhafte Weise wesentlich erleichtert.

### Zeichnung

Die Erfindung wird nachfolgend anhand eines bevorzugt ausgewählten, in der Zeichnung dargestellten Ausführungsbeispiels näher erläutert. Es zeigen
- Figur 1: eine erfindungsgemäße Kolbenpumpe im Achsschnitt; und
- Figur 2: eine Verliersicherung der Kolbenpumpe aus Figur 1 in größerem Maßstab im Achsschnitt.

### Beschreibung der Ausführungsbeispiele

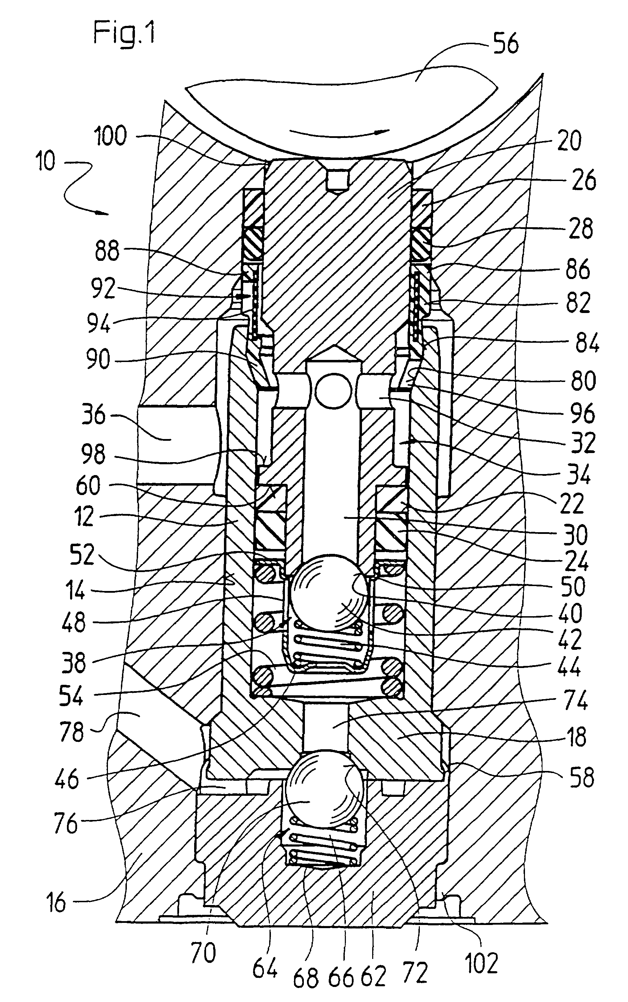

Die in Figur 1 dargestellte insgesamt mit 10 bezeichnete erfindungsgemäße Kolbenpumpe weist eine Laufbuchse 12 auf, die in eine gestufte Zylinderbohrung 14 eines Hydraulikblocks eingesetzt ist, der ein Pumpengehäuse 16 bildet. Der Hydraulikblock, von dem in der Zeichnung lediglich ein die Kolbenpumpe 10 umgebendes Bruchstück dargestellt ist, ist Teil einer schlupfgeregelten, im übrigen nicht dargestellten, hydraulischen Fahrzeugbremsanlage. In ihm sind außer der Kolbenpumpe 10 weitere hydraulische Bauelemente wie Magnetventile und Hydrospeicher eingesetzt und ein Hauptbremszylinder sowie Radbremszylinder angeschlossen. Mittels des Hydraulikblocks sind die hydraulischen Bauelemente hydraulisch miteinander verschaltet.

In der Laufbuchse 12 ist ein bolzenförmiger Kolben 20 über etwa die Hälfte seiner Länge aufgenommen. Ein in der Laufbuchse 12 befindliches Ende des Kolbens 20 ist mit einem Führungsring 22 an der Innenoberfläche der Laufbuchse 12 axial verschieblich geführt und mit einem Dichtring 24 abgedichtet. Das andere, aus der Laufbuchse 12 vorstehende Ende des Kolbens 20 ist mittels eines Führungsrings 26 axial verschieblich unmittelbar in der Zylinderbohrung 14 des Pumpengehäuses 16 geführt und mit einem Dichtring 28 am Pumpengehäuse 16 abgedichtet.

Zum Fluideinlaß ist der Kolben 20 mit einer axialen Sackbohrung 30 von seinem. in der Laufbuchse 12 befindlichen Ende her versehen, die nahe ihres Grundes von Querbohrungen 32 gekreuzt wird. Ein Nenndurchmesser des Kolbens 20 entspricht einem Innendurchmesser der Laufbuchse 12, wobei eine Spielpassung zwischen Kolben 20 und Laufbuchse 12 besteht, d. h. der Kolben 20'weist in Bezug auf die Laufbuchse 12 ein Untermaß auf, das die Axialverschiebbarkeit des Kolbens 20 gewährleistet. Sackbohrung 30 und Querbohrungen 32 kommunizieren durch eine breite Nut 34 im Umfang des Kolbens 20 und eine offene Stirnseite der Laufbuchse 12 mit einer Einlaßbohrung 36, die radial zur Kolbenpumpe 10 in die Zylinderbohrung 14 mündet.

Als Einlaßventil 38 weist die erfindungsgemäße Kolbenpumpe 10 ein federbelastetes Rückschlagventil auf, welches an dem in der Laufbuchse 12 befindlichen Ende des Kolbens 20 angebracht ist: Eine Mündung der Sackbohrung 30 ist als konischer Ventilsitz 40 ausgebildet, gegen den eine Ventilkugel 42 als Ventilschließkörper von einer Schraubendruckfeder als Ventilschließfeder 44 gedrückt wird. Die Ventilschließfeder 44 stützt sich gegen einen Boden eines topfförmigen Ventilkäfigs 46 ab, der als Tiefziehteil aus Blech hergestellt ist und Durchlässe 48 aufweist. An seiner offenen Seite weist der Ventilkäfig 46 eine umlaufende Ringstufe 50, mit der er an der in der Laufbuchse 12 befindlichen Stirnseite des Kolbens 20 anliegt, und einen Radialflansch 52 auf, an dem er von einer Kolbenrückstellfeder 54 gegen die Stirnseite des Kolbens 20 gedrückt wird. Ventilkugel 42 und Ventilschließfeder 44 sind im Ventilkäfig 46 aufgenommen. Die Kolbenrückstellfeder 54 ist stärker ausgebildet als die Ventilschließfeder 44. Die Kolbenrückstellfeder 54 stützt sich gegen den Laufbuchsenboden 18 ab.

Zum Antrieb des Kolbens 20 zu einer in axialer Richtung hin- und hergehenden Hubbewegung weist die erfindungsgemäße Kolbenpumpe 10 einen elektromotorisch rotierend antreibbaren Exzenter 56 auf, gegen dessen Umfang der Kolben 20 von der Kolbenrückstellfeder 54 gedrückt wird.

Der in der Laufbuchse 12 befindliche Führungsring 22 und Dichtring 24 sind in axialer Richtung zwischen dem Radialflansch 52 des Ventilkäfigs 46 und einer Ringstufe 60 des Kolbens 20 auf dem Kolben 20 fixiert.

Auf den Laufbuchsenboden 18 ist ein zylindrisches Verschlußelement 62 aufgesetzt und mit einem Bördel 58 mit der Laufbuchse 12 verbunden. Das Verschlußelement 62 dient zum druckdichten Verschließen der Zylinderbohrung 14 und zum Fixieren der Laufbuchse 12 im Pumpengehäuse 16. Im Verschlußelement 62 ist ein Auslaßventil 64 in Form eines federbelasteten Rückschlagventils untergebracht: Das Verschlußelement 62 weist eine koaxiale Sackbohrung 66 auf, in die eine Schraubendruckfeder als Ventilschließfeder 68 und eine Ventilkugel 70 als Ventilschließkörper eingesetzt sind. Die Ventilkugel 70 wirkt zusammen mit einem konischen Ventilsitz 72, weicher an einer Mündung einer Mittelbohrung 74 angebracht ist, die den Laufbuchsenboden 18 axial durchsetzt. Der Ventilsitz 72 ist durch Prägen geformt und verfestigt. Ein Auslaß des Fluids erfolgt durch Radialkanäle 76 zwischen dem Laufbuchsenboden 18 und dem Verschlußelement 62 in eine radiale Auslaßbohrung 78 im Pumpengehäuse 16.

An einem offenen Ende ist die Laufbuchse 12 mit einer flachen, V-förmigen Nut 80 auf ihrer Innenseite versehen. In diese V-förmige Nut 80 ist ein hohlzylindrisches Filter 82 eingeschnappt, welches im Bereich der V-förmigen Nut 80 einen umlaufenden Wulst 84 aufweist, welcher eine zur V-förmigen Nut 80 der Laufbuchse 12 komplementäre V-Form hat. Der V-förmige Wulst 84 des Filters 82 und die V-förmige Nut 80 der Laufbuchse 12 bilden eine Schnappverbindung.

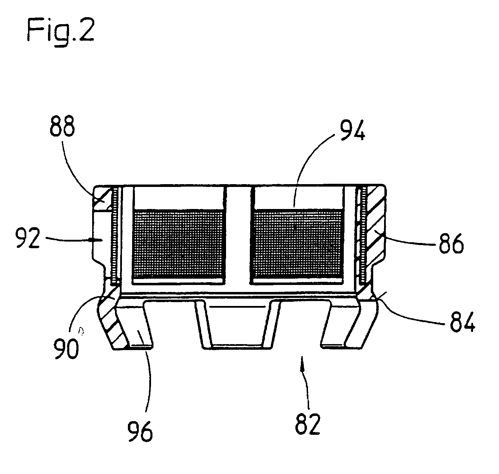

Das Filter 82 weist ein Filtergerüst mit achsparallel verlaufenden Filterstegen 86 auf, die an ihren Enden einstückig mit zwei Filterringen 88, 90 sind (Figur 2). Das Filtergerüst mit den Filterstegen 86 und den Filterringen 88, 90 ist ein Spritzgießteil aus Kunststoff. Die Filterstege 86 und die Filterringe 88, 90 umrahmen Filterfenster 92, in die ein Metall-Filtergewebe 94 eingesetzt ist. Das Filtergewebe 94 ist schlauchförmig, es ist mit dem Filtergerüst 86, 88, 90 umspritzt.

Einer der beiden Filterringe 90 weist den V-förmigen Wulst 84 auf, welcher in der V-förmigen Nut 80 in der Laufbuchse 12 einliegt. Die Filterstege 86 stehen die Laufbuchse 12 axial verlängernd von der Laufbuchse 12 ab. Der andere Filterring 88 wird mit axialem Abstand von der Laufbuchse 12 von den Filterstegen 86 an der Laufbuchse 12 gehalten. Dieser Filterring 88 bildet eine Führung, die den Kolben 20 koaxial in der Laufbuchse 12 ausrichtet, bis diese in die Zylinderbohrung 14 des Pumpengehäuses 16 eingesetzt ist. Bei in das Pumpengehäuse 16 eingesetzter Laufbuchse 12 kann der Kolben 20 zwar auch vom Filterring 88 im Pumpengehäuse 16 geführt werden, vorzugsweise übernimmt jedoch der in das Pumpengehäuse 16 eingesetzte Führungsring 26 diese Aufgabe. Der die Kolbenführung bildende Filterring 88 des Filters 82 verhindert, daß sich der Kolben 20 in der Laufbuchse 12 schrägstellt und stellt sicher, daß der Kolben 20 beim Einsetzen der Laufbuchse 12 in die Zylinderbohrung 14 des Pumpengehäuses 16 nicht gegen den in das Pumpengehäuse 16 eingesetzten Dichtring 28 stößt, sondern in den Dichtring 28 und den Führungsring 26 hineingelangt.

Der Filterring 90 mit dem V-förmigen Wulst 84 liegt abdichtend in der V-förmigen Nut 80 der Laufbuchse 12 ein, so daß kein von der Kolbenpumpe 10 angesaugtes Fluid ungefiltert in die Laufbuchse 12 gelangen kann. Der andere Filterring 88 liegt abdichtend an der Zylinderbohrung 14 des Pumpengehäuses 16 an. in die Kolbenpumpe 10 einströmendes Fluid gelangt zwischen dem Filterring 90 mit dem V-förmigen Wulst 84 und dem Kolben 20 hindurch und durch die Nut 34 im Kolben 20 in die Querbohrung 32 des Kolbens 20.

Das Filter 82 bildet zugleich eine Verliersicherung des Kolbens 20 in der Laufbuchse 12: Von dem in der V-förmigen Nut der Laufbuchse 12 einliegenden Filterring 90 stehen Federzungen 96 in etwa auf einer gedachten Konusfläche schräg nach innen in die Laufbuchse 12 hinein ab. Die Federzungen 96 haben Abstand in Umfangsrichtung voneinander. Die Federzungen 96 sind einstückig mit dem Filterring 90. Die Federzungen 96, welche die Verliersicherung für den Kolben 20 bilden, ragen in die Nut 34 im Kolben 20 hinein, d. h. freie, dem Laufbuchsenboden 18 zugewandte Enden der Federzungen 96 befinden sich radial innerhalb einer gedachten Kolbenmantelfläche.

Eine Nutflanke 98 der Nut 34 im Kolben 20 bildet eine Hinterschneidung, die mit den Federzungen 96 zusammenwirkt: Bis zum Einsetzen der Laufbuchse 12 in die Zylinderbohrung 14 des Pumpengehäuses 16 drückt die Kolbenrückstellfeder 54 den Kolben 20 mit seiner die Hinterschneidung bildenden Nutflanke 98 in Anlage an die Federzungen 96, die die Nutflanke 98 hintergreifen. Auf diese Weise halten die Federzungen 96 den Kolben 20 gegen die Kraft der Rückstellfeder 54 in der Laufbuchse 12, der Kolben 20 läßt sich nicht aus der Laufbuchse 12 herausziehen.

Zum Zusammenbau der erfindungsgemäßen Kolbenpumpe 10 wird das die Verliersicherung bildende Filter 82 auf den Kolben 20 aufgeschoben, bis die Federzungen 96 in die Nut 34 des Kolbens 20 hinein federn. Dies bedeutet, die Federzungen 96 der Verliersicherung hintergreifen die Nutflanke 98 der Nut 34 des Kolbens 20. Zum Aufsetzen des Filters 82 ist der Kolben 20 an seiner dem Exzenter 56 zugewandten Stirnseite mit einer Fase 100 versehen, die die Federzungen 96 beim Aufschieben des die Verliersicherung bildenden Filters 82 auf den Kolben 20 auseinanderspreizt.

Der Kolben 20 mit dem aufgeschobenen Filter 82 wird zusammen mit dem auf den Kolben 20 aufgeschobenen Führungsring 22 und Dichtring 24, dem am Stirnende des Kolbens 20 angesetzten Einlaßventil 38 und der Kolbenrückstellfeder 54 in die Laufbuchse 12 eingeführt. Dabei gelangen die schräg nach innen stehenden Federzungen 96 des Filters 82 in eine Mündung der Laufbuchse 12 und werden radial zusammengedrückt. Über die Federzungen 96 wird auch der Filterring 90 mit dem V-förmigen Wulst 84 elastisch radial zusammengedrückt. Für das Zusammendrücken der Federzungen 96 und des Filterrings 90 bietet die Nut 34 im Kolben 20 Freiraum radial nach innen. Aufgrund seiner Elastizität weitet sich der Filterring 90 bei Erreichen der V-förmigen Nut 80 in der Laufbuchse 12 wieder auf und ist nach Art einer Schnappverbindung in der Laufbuchse 12 gehalten und sichert seinerseits den Kolben 20 gegen die Kraft der Kolbenrückstellfeder 54 in der Laufbuchse 12.

Nach dem Anbringen des Verschlußelements 62 mit dem in das Verschlußelement 62 eingesetzten Auslaßventil 64 am Laufbuchsenboden 18 mittels des Bördels 58 wird die komplette Vormontagebaugruppe mit der Laufbuchse 12, dem verliersicher in sie eingesetzten Kolben 20 und dem Verschlußelement 62 in die Zylinderbohrung 14 des Pumpengehäuses 16 eingepreßt und durch eine Verstemmung 102 des Pumpengehäuses 16 am Verschlußelement 62 druckdicht im Pumpengehäuse 16 fixiert. Das Anbringen des Verschlußelements 62 an der Laufbuchse 12 kann vor oder nach dem Einsetzen des Kolbens 20 in die Laufbuchse 12 erfolgen.

Zur Klarheit wird angemerkt, daß die in der Zeichnung dargestellten Achsschnitte an der gedachten Achse so abgewinkelt sind, daß der Schnitt in der jeweils linken Bildhälfte durch ein Filterfenster 92 und eine Federzunge 96 hindurchgeht und der Schnitt in der rechten Bildhälfte einen Filtersteg 86 schneidet und zwischen zwei Federzungen 96 hindurchverläuft.

Die der Nutflanke 98 zugewandte Stirnseite der Federzungen 96 des Filters 82 bildet einen der Laufbuchse 12 zugeordneten ersten axialen Anschlag. Die dem Filter 82 stirnseitig zugewandte Nutflanke 98 des Kolbens 20 bildet einen dem Kolben 20 zugeordneten zweiten axialen Anschlag. Bevor die den Kolben 20, die Laufbuchse 12 und das Filter 82 umfassende Vormontagebaugruppe in das Pumpengehäuse 16 eingesetzt ist, wirkt die Verliersicherung in der Weise, daß der Kolben 20 axial nur so weit aus der Laufbuchse 12 herausbewegt werden kann, bis der dem Kolben 20 zugeordnete Anschlag an dem der Laufbuchse 12 zugeordneten Anschlag zur Anlage kommt. Nach dem Einbau der Vormontagebaugruppe in das Pumpengehäuse 16 wird der Ausfahrhub des Kolbens 20 durch den Exzenter 56 begrenzt.

## Patentansprüche

1. Kolbenpumpe mit einem zu einer hin- und hergehenden Hubbewegung antreibbaren Kolben, der axial verschieblich auf mindestens einem Teil seiner Länge in einer Laufbuchse aufgenommen ist, die in ein Pumpengehäuse einsetzbar ist, wobei an der Laufbuchse eine Verliersicherung für den Kolben angebracht ist, die eine Hinterschneidung des Kolbens hintergreift und wobei die Hinterschneidung innerhalb eines Kolbenumfangs am Kolben angebracht ist, **dadurch gekennzeichnet,**
**dass** die Verliersicherung (96) ringförmig den Kolben (20) umschlingend ausgebildet ist, dass die Hinterschneidung (98) des Kolbens (20) durch eine Nutflanke einer umlaufenden in Kolbenumfang angebrachten Nut (34) gebildet ist und dass die Verliersicherung (96) in radialer Richtung federnd ausgebildet ist und selbsttätig in Eingriff mit der Hinterschneidung (98) gelangt.

2. Kolbenpumpe mit einem zu einer hin- und hergehenden Hubbewegung antreibbaren Kolben, der axial verschieblich auf mindestens einem Teil seiner Länge in einer Laufbuchse aufgenommen ist, die in ein Pumpengehäuse einsetzbar ist, wobei am Kolben eine Verliersicherung angebracht ist, die eine Hinterschneidung der Laufbuchse hintergreift und den Kolben in der Laufbuchse hält,
**dadurch gekennzeichnet, dass** die Verliersicherung (96) ringförmig den Kolben (20) umschlingend ausgebildet ist, dass die Hinterschneidung (98) der Laufbuchse (12) durch eine Nutflanke einer umlaufenden Nut (80) in der Laufbuchse (12) gebildet ist und dass die Verliersicherung (96) in radialer Richtung federnd ausgebildet ist und selbsttätig in Eingriff mit der Hinterschneidung (98) gelangt.

3. Kolbenpumpe nach Anspruch 1 oder 2, **dadurch gekennzeichnet, dass** der Kolben (20) auf einem Teil seiner Länge axial aus der Laufbuchse (12) vorsteht und sowohl innerhalb der Laufbuchse (12) als auch außerhalb der Laufbuchse (12) einen Nenndurchmesser aufweist, der einem Innendurchmesser der Laufbuchse (12) entspricht.

4. Kolbenpumpe nach Anspruch 1, **dadurch gekennzeichnet, dass** die Verliersicherung mindestens eine Federzunge (96) aufweist, die die Hinterschneidung (98) des Kolbens (20) hintergreift.

5. Kolbenpumpe nach Anspruch 1, **dadurch gekennzeichnet, dass** die Laufbuchse (12) eine umlaufende Nut (80) in einer Innenumfangsfläche aufweist, in die die Verliersicherung (82, 84, 90, 96) eingesetzt ist.

6. Kolbenpumpe nach Anspruch 1, **dadurch gekennzeichnet, dass** die Verliersicherung (84, 90, 96) Bestandteil eines hohlzylindrischen Filters (82) ist, welches den Kolben (20) umgebend in axialer Verlängerung der Laufbuchse (12) an der Laufbuchse (12) angebracht ist.

7. Kolbenpumpe nach Anspruch 4, **dadurch gekennzeichnet, dass** das Filter (82) eine Führung (88) für den Kolben (20) aufweist.

8. Kolbenpumpe nach Anspruch 1 oder 2, **dadurch gekennzeichnet, dass** an die Verliersicherung (82, 98) eine den Kolben (20) führende Führung (88) angeformt ist.

## Claims

1. Piston pump, with a piston which is capable of being driven in a to-and-fro lifting movement and which is received axially displaceably, over at least part of its length, in a liner capable of being inserted into a pump casing, the liner having formed on it, for the piston, a loss prevention device which engages behind an undercut of the piston, and the undercut being formed on the piston within a piston circumference, **characterized in that** the loss prevention device (96) is designed to loop annularly, around the piston (20), **in that** the undercut (98) of the piston (20) is formed by a groove flank of a continuous groove (34) made in the piston circumference, and **in that** the loss prevention device (96) is designed resiliently in the radial direction and comes automatically into engagement with the undercut (98).

2. Piston pump, with a piston which is capable of being driven in a to-and-fro lifting movement and which is received axially displaceably, over at least part of its length, in a liner capable of being inserted into a pump casing, the piston having formed on it a loss prevention device which engages behind an undercut of the liner and which holds the piston in the liner, **characterized in that** the loss prevention device (96) is designed to loop annularly around the piston (20), **in that** the undercut (98) of the liner (12) is formed by a groove flank of a continuous groove (80) in the liner (12), and **in that** the loss prevention device (96) is designed resiliently in the radial direction and comes automatically into engagement with the undercut (98).

3. Piston pump according to Claim 1 or 2, **characterized in that** the piston (20) projects axially, over part of its length, out of the liner (12) and both inside the liner (12) and outside the liner (12) has a nominal diameter which corresponds to an inside diameter of the liner (12).

4. Piston pump according to Claim 1, **characterized in that** the loss prevention device has at least one spring tongue (96) which engages behind the undercut (98) of the piston (20).

5. Piston pump according to Claim 1, **characterized in that** the liner (12) has, in an inner circumferential surface, a continuous groove (80) into which the loss prevention device (82, 84, 90, 96) is inserted.

6. Piston pump according to Claim 1, **characterized in that** the loss prevention device (84, 90, 96) is an integral part of a hollow-cylindrical filter (82) which, surrounding the piston (20), is mounted on the liner (12) in the axial prolongation of the said liner (12).

7. Piston pump according to Claim 4, **characterized in that** the filter (82) has a guide (88) for the piston (20).

8. Piston pump according to Claim 1 or 2, **characterized in that** a guide (88) guiding the piston (20) is integrally formed on the loss prevention device (82, 98).

## Revendications

1. Pompe à piston, ayant un piston pouvant être entraîné en une course alternative, logé mobile axialement sur au moins une partie de sa longueur, dans une chemise de cylindre qui, placée dans un carter de pompe, comporte pour le piston une sécurité antiperte qui accroche par l'arrière une contre-dépouille du piston, la contre-dépouille étant pratiquée sur le piston à l'intérieur d'une périphérie du piston,
**caractérisée en ce que**
la sécurité antiperte (96) est de forme annulaire entourant le piston (20), la contre-dépouille (98) du piston (20) est formée par un flanc de rainure d'une rainure périphérique (34) pratiquée dans la périphérie du piston et la sécurité antiperte (96) est élastique en direction radiale et vient automatiquement en prise avec la contre-dépouille (98).

2. Pompe à piston ayant un piston pouvant être entraîné en une course alternative, logé mobile axialement sur au moins une partie de sa longueur, dans une chemise de cylindre placée dans un carter de pompe, avec une sécurité antiperte installée sur le piston et qui accroche par l'arrière une contre-dépouille de la chemise de cylindre pour maintenir le piston dans la chemise de cylindre,
**caractérisée en ce que**
la sécurité antiperte (96) est de forme annulaire entourant le piston (20), la contre-dépouille (98) de la chemise de cylindre (12) est formée par un flanc de rainure d'une rainure périphérique (80) dans la chemise de cylindre (12) et la sécurité antiperte (96) est élastique en direction radiale et vient automatiquement en prise avec la contre-dépouille (98).

3. Pompe à piston selon la revendication 1 ou 2,
**caractérisée en ce que**
le piston (20) est saillant axialement hors de la chemise de cylindre (12) sur une partie de sa longueur et présente, aussi bien à l'intérieur de la chemise de cylindre (12) qu'à l'extérieur de la chemise de cylindre (12), un diamètre nominal qui correspond à un diamètre intérieur de la chemise de cylindre (12).

4. Pompe à piston selon la revendication 1,
**caractérisée en ce que**
la sécurité antiperte présente au moins une languette élastique (96), qui accroche par l'arrière la contre-dépouille (98) du piston (20).

5. Pompe à piston selon la revendication 1,
**caractérisée en ce que**
la chemise de cylindre (12) présente une rainure périphérique (80) dans une surface périphérique intérieure, dans laquelle la sécurité antiperte (82, 84, 90, 96) est insérée.

6. Pompe à piston selon la revendication 1,
**caractérisée en ce que**
la sécurité antiperte (84, 90, 96) fait partie d'un filtre cylindrique creux (82), qui est placé sur la chemise de cylindre (12), dans le prolongement axial de la chemise de cylindre (12) et en entourant le piston (20).

7. Pompe à piston selon la revendication 4,
**caractérisée en ce que**
le filtre (82) présente un guidage (88) pour le piston (20).

8. Pompe à piston selon la revendication 1 ou 2,
**caractérisée en ce qu'**
un guidage (88) guidant le piston (20) est formé sur la sécurité antiperte (82, 98).
